# EUROPEAN PATENT SPECIFICATION

(11) **EP 2 896 450 B1**
(45) Date of publication and mention of the grant of the patent: **19.06.2019**
(21) Application number: 13837947.4
(22) Date of filing: 13.08.2013
(51) Int. Cl.: B01D 53/34, B01D 53/64, B01D 53/50, B01D 53/75, B01D 53/86, C02F 1/26, F23J 15/00, C02F 1/04, C02F 1/52, C02F 1/56, C02F 1/68, C02F 1/72, C02F 9/00, C02F 11/12, C02F 101/10, C02F 101/20, C02F 103/18

(54) **METHOD FOR TREATING MERCURY IN EXHAUST GAS**
VERFAHREN ZUR BEHANDLUNG VON QUECKSILBER IN ABGAS
PROCÉDÉ DE TRAITEMENT DU MERCURE CONTENU DANS UN GAZ D'ÉCHAPPEMENT

(30) Priority: 14.09.2012 JP 2012203443
(43) Date of publication of application: 22.07.2015
(73) Proprietor: Mitsubishi Hitachi Power Systems, Ltd., Yokohama 220-8401 (JP)
(72) Inventor: NAGAE, Shoko, Tokyo 108-8215 (JP); KAGAWA, Seiji, Tokyo 108-8215 (JP); NAGAYASU, Tatsuto, Tokyo 108-8215 (JP); UKAI, Nobuyuki, Tokyo 108-8215 (JP); OKAMOTO, Takuya, Tokyo 108-8215 (JP)
(74) Representative: Studio Torta S.p.A.
(86) International application number: PCT/JP2013/071887
(87) International publication number: WO 2014/041952

(56) References cited:
- EP-A1- 2 248 574
- EP-A1- 2 463 016
- WO-A1-2011/104840
- DE-A1-102008 005 742
- JP-A- H10 230 137
- JP-A- 2000 197 811
- JP-A- 2008 142 602
- JP-A- 2009 202 107
- JP-A- 2010 162 520
- US-A1- 2008 107 579
- Bernhard W Vosteen ET AL: "Bromgestützte Quecksilber-Abscheidung aus den Abgasen von Verbrennungsanlagen", , 22 April 2004 (2004-04-22), pages 1-111, XP055257565, Internet Retrieved from the Internet: URL:http://www.vosteen-consulting.de/downl oads/2003_12_Vosteen_Consulting_LUA_Studie _Hg_Br.pdf [retrieved on 2016-03-11]

## Description

### Field

The present invention relates to a treatment method for mercury in a flue gas, capable of removing mercury in the flue gas down to extremely low enrichment.

### Background

A flue gas of coal combustion and a flue gas generated at the time of burning heavy oil may contain metal mercury (Hg⁰) in addition to soot dust, sulfur oxide (SOx), nitrogen oxide (NOx). In recent years, various kinds of methods and apparatuses are invented to treat metal mercury (Hg⁰) by combining an NOx removal unit configured to reduce NOx and a wet SOx removal unit in which alkali absorbent is used as SOx absorbent.

As the method of treating metal mercury (Hg⁰) in the flue gas, there is a proposed method in which NH₄Cl solution is sprayed in a liquid state to the inside of a flue gas duct, and supplied into the flue gas duct in an upstream process of an NOx removal unit (for example, refer to Patent Literatures 1 and 2). When NH₄Cl solution is sprayed into the flue gas duct in the liquid state, NH₄Cl dissociates and generates an ammonium (NH₃) gas and a hydrogen chloride (HCl) gas. The NH₃ gas behaves as a reducing agent, and the HCl gas behaves as a mercury chlorination agent. More specifically, on a denitrification catalyst filled in the NOx removal unit, reduction reaction progresses between NH₃ and NOx in the flue gas as shown in a following Formula (1), and oxidation reaction progresses between HCl and Hg⁰ in the flue gas as shown in a following Formula (2). NH₃ is reduced and denitrated, and also the metal mercury (Hg⁰) is oxidized on the denitrification catalyst, and water-soluble mercury chloride (HgCl₂) is generated. Then, HgCl₂ is dissolved in gypsum slurry solution to remove mercury contained in the flue gas by the SOx removal unit according to a wet limestone-gypsum method provided on a downstream side.

4NO+4NH₃+O₂ → 4N₂+6H₂O (1)

Hg⁰+1/2O₂+2HCl → HgCl₂+H₂O (2)

### Citation List

### Patent Literature

Patent Literature 1: Japanese Patent Application Laid-open No. 2008-142602
Patent Literature 2: Japanese Patent Application Laid-open No. 2009-202107
   Treatment methods for removing Hg are disclosed in EP2463016 and Bernhard W Vosteen et al. "Bromgestützte Quecksilber-Abscheidung aus den Abgasen von Verbrennungsanlagen", Internet, (20040422), pages 1 - 111.

### Summary

### Technical Problem

Meanwhile, according to the proposal of removing mercury in the flue gas in the related arts, a part of mercury oxide (Hg²⁺) that has been absorbed and removed may be reduced to metal mercury (Hg⁰) and emitted from a stack in the same manner in the case where the absorbent in the wet SOx removal unit comes to have a reducing atmosphere again.

According to the proposal of removing mercury in the flue gas in the related arts, oxidation-reduction potential of the absorbent is controlled to prevent mercury from being emitted due to reduction.

The present invention is achieved in view of the above-described situation, and directed to providing a treatment method for mercury in a flue gas, in which mercury in the flue gas removed by the SOx removal unit can be selectively stabilized in a solid phase or a liquid phase.

### Solution to Problem

According to the present invention in order to solve the above-mentioned problems, there is provided a treatment method for mercury in a flue gas according to claim 1.

Further aspects of the present invention are provided in the dependent claims.

### Advantageous Effects of Invention

According to the present invention, enrichment of bromine in alkali absorbent inside the wet SOx removal unit is set to predetermined enrichment or higher. By thus setting the enrichment of bromine to the predetermined enrichment or higher, the mercury is kept in an Hg²⁺ ionic state inside the alkali absorbent such as gypsum slurry solution discharged from the SOx removal unit, and mercury in the flue gas can be stabilized in the liquid phase.

### Brief Description of Drawings

FIG. 1 is a schematic diagram illustrating a first treatment system for mercury in a flue gas.
FIG. 2 is a schematic diagram illustrating a second treatment system for mercury in a flue gas.
FIG. 3 is a schematic diagram illustrating a third treatment system for mercury in a flue gas.
FIG. 4 is a schematic diagram illustrating a fourth treatment system for mercury in a flue gas.
FIG. 5 is a schematic diagram illustrating a fifth treatment system for mercury in a flue gas for use with the method of the present invention.
FIG. 6 is a schematic diagram illustrating a sixth treatment system for mercury in a flue gas for use with the method of the present invention.
FIG. 7 is a diagram illustrating a relation between enrichment of Br in slurry absorbent and enrichment of Hg in gypsum.

### Description of Embodiments

Preferred embodiments of the present invention will be described with reference to the attached drawings . Note that the present invention is not limited to the embodiments and is intended to include configurations in which the respective embodiments are combined in the case where there is a plurality of embodiments.

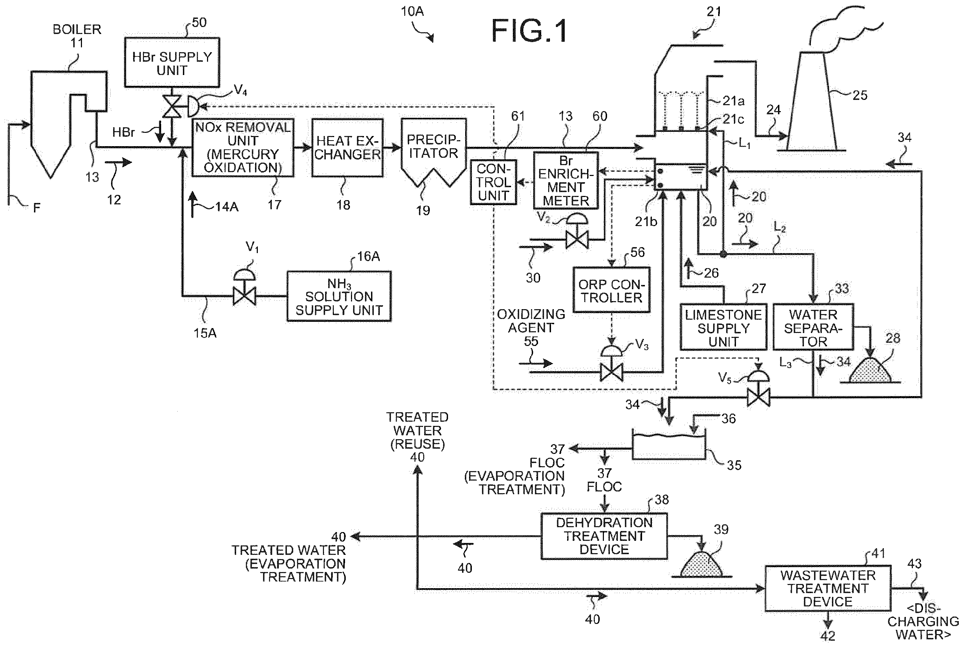

FIG. 1 is a schematic diagram illustrating a first treatment system for mercury in a flue gas.

As illustrated in FIG. 1, a treatment system for mercury in a flue gas 10A is a treatment system for mercury in the flue gas configured to remove mercury contained in a flue gas 12 flowing from a boiler 11, and includes: an NOx removal unit 17 configured to denitrate nitrogen oxide (NOx) in the flue gas 12 flowing from the boiler 11 where fuel F is supplied and burned by the boiler; a heat exchanger (AH) 18 disposed on a downstream side of the NOx removal unit 17 and configured to adjust a flue gas temperature; a precipitator 19 disposed on a downstream side of the heat exchanger 18 and configured to remove soot dust in the flue gas 12; a wet SOx removal unit 21 configured to remove mercury oxide Hg²⁺ in the flue gas 12 by using alkali absorbent, and also desulfurize sulfur oxide in the flue gas 12; and an HBr supply unit 50 configured to supply HBr, namely, a Br compound into a flue gas duct 13 where the flue gas 12 is discharged from a boiler outlet. Further, enrichment of bromine inside the alkali absorbent in the wet SOx removal unit 21 is set to predetermined enrichment or higher.

Here, in FIG. 1, a reference sign 13 represents the flue gas duct from which the flue gas 12 is discharged, and 25 represents the stack from which the purged flue gas 12 is discharged to the outside, and V₁, V₂, V₃ represent valves.

Ammonia (NH₃) solution 14A is supplied, as a denitration aid, from an ammonia (NH₃) solution supply unit 16A into the flue gas 12 flowing in the flue gas duct 13 via an ammonia (NH₃) supply line 15A on a previous stage side of the NOx removal unit 17.

Further, NOx in the flue gas 12 is reduced with a NH₃ by a denitrification catalyst.

For the NOx removal unit 17, a general unit including a reducing and denitrating catalyst can be used. The reducing and denitrating catalyst is not specifically limited, but for example, a catalyst in which metal oxide of W, Sn, In, Co, Ni, Fe, Ni, Ag, Cu, etc. is supported on a carrier such as zeolite can be used.

The NH₃ solution 14A is supplied, via the ammonia (NH₃) solution supply line 15A, from the NH₃ solution supply unit 16A to the flue gas 12 discharged from the boiler 11.

Preferably, a temperature of the flue gas 12 in the flue gas duct 13 is, for example, 320°C or more and 420°C or less, but more preferably, 320°C or more and the 380°C or less although it depends on combustion conditions at the boiler 11. The reason is that NOx denitration reaction on the denitrification catalyst can be effectively performed in this temperature range.

In the NOx removal unit 17, the supplied NH₃ gas is used to reduce and denitrate NOx.

More specifically, NH₃ gas reduces and denitrates NOx on the denitrification catalyst charged into a denitrification catalyst layer filled in the NOx removal unit 17 as shown in a following formula (1).

4NO+4NH₃+O₂ → 4N₂+6H₂O ... (1)

As for the flue gas 12, NOx in the flue gas 12 is reduced at the NOx removal unit 17, and then the temperature of the flue gas 12 is decreased by the heat exchanger 18.

After that, the flue gas 12 is passed through the precipitator (e.g., ESP) 19 and fed to the wet SOx removal unit 21. Further, a heat recovery device may be disposed between the heat exchanger 18 and the precipitator 19.

Next, after dust removal at the precipitator (ESP) 19, the flue gas 12 is fed to the wet SOx removal unit 21 for desulfurization treatment.

In the wet SOx removal unit 21, the flue gas 12 is fed from a wall surface side of a unit bottom portion 21b of a unit body 21a, and limestone-gypsum slurry 20 to be used as the alkali absorbent is supplied into the unit body 21a via an absorbent feed line L₁ and jetted from a nozzle 21c to a top portion side of the unit. The flue gas 12 flowing up from the unit bottom portion 21b side inside the unit body 21a is made gas-liquid contact with the limestone-gypsum slurry 20 jetted from the nozzle 21c and flowing down in an opposing manner, and HgCl₂ and sulfur oxide (SOx) in the flue gas 12 are absorbed into the limestone-gypsum slurry 20 and separated and removed from the flue gas 12. As a result, the flue gas 12 is purged. The flue gas 12 purged by the limestone-gypsum slurry 20 is discharged from the unit top portion side, and then discharged from a stack 25 outside the system as a purged gas 24.

Note that limestone 26 refilled into the unit body 21a is supplied from a limestone supply unit 27.

The limestone-gypsum slurry 20 used for desulfurization in the flue gas 12 is generated by mixing limestone (CaCO₃) slurry, gypsum (CaSO₄) slurry, and water The limestone (CaCO₃) is obtained by dissolving limestone powder in water, and the gypsum (CaSO₄) slurry is obtained by reacting the limestone 26 with SOx in the flue gas 12 and further executing oxidation. For the limestone-gypsum slurry 20, liquid stored in the unit bottom portion 21b of the unit body 21a of the wet SOx removal unit 21 is pumped up and used, for example. Inside the unit body 21a, SOx in the flue gas 12 is reacted with the limestone (CaCO₃) inside the limestone-gypsum slurry 20 as shown in a following formula (3).

CaCO₃ + SO₂ + 0.5H₂O → CaSO₃·0.5H₂O+CO₂ (3)

On the other hand, the limestone-gypsum slurry 20 having absorbed SOx in the flue gas 12 is mixed with water 30 supplied into the unit body 21a, and oxidation treatment is applied by using air, namely, an oxidizing agent 55 supplied to the unit bottom portion 21b of the unit body 21a. At this point, the limestone-gypsum slurry 20 flowing down inside the unit body 21a is reacted with the water 30 and the air as shown in a following formula (4).

CaSO₃·0.5H₂O+0.5O₂+1.5H₂O → CaSO₄·2H₂O (4)

Thus, SOₓ in the flue gas 12 is caught in a form of gypsum CaSO₄·2H₂O in the wet SOx removal unit 21.

At this point, mercury bromide (HgBr₂) in the flue gas 12 is soluble in water, and therefore, is transferred to the limestone-gypsum slurry 20 side.

Thus, the treatment system for mercury in the flue gas 10A is a removal system for mercury in the flue gas configured to remove Hg contained in the flue gas 12 discharged from the boiler, and includes: the heat exchanger (AH) 18 configured to execute heat exchange for the flue gas 12 discharged from the boiler 11; the precipitator 19 configured to remove the soot dust in the flue gas 12; and the wet SOx removal unit 21 configured to remove mercury oxide Hg²⁺ in the flue gas 12 with the alkali absorbent, and also desulfurize sulfur oxide in the flue gas 12. Further, the enrichment of bromine inside the alkali absorbent is controlled to be the predetermined enrichment or higher inside the wet SOx removal unit 21. As a result, mercury Hg²⁺ is stabilized in an ionic state in the solution of the limestone-gypsum slurry 20 discharged from the wet SOx removal unit 21 by setting the enrichment of bromine to the predetermined enrichment or higher.

In other words, HBr supplied from the HBr supply unit 50 is introduced into the wet SOx removal unit 21 in a state that HBr having the predetermined enrichment is contained in the flue gas 12. Therefore, reaction in a following formula (5) progresses in a leftward direction inside the slurry absorbent, and mercury exists in the ionic state. As a result, mercury can be stabilized in a liquid phase.

Hg²⁺+SO₄²⁻ ⇔ HgSO₄ (5)

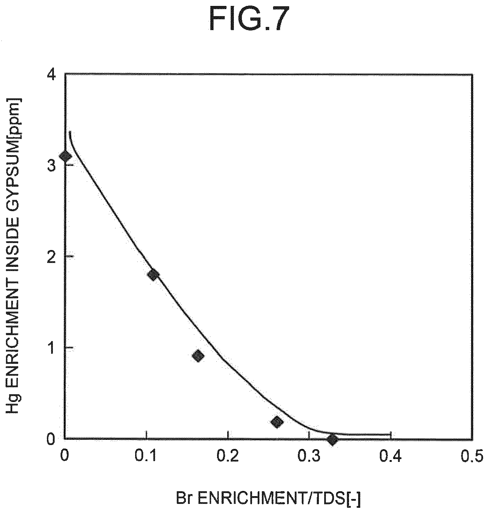

Meanwhile, FIG. 7 is a diagram illustrating a relation between the enrichment of Br in the slurry absorbent and enrichment of Hg in the gypsum.

As illustrated in FIG. 7, in the case where the enrichment of Br contained inside a total dissolved substance (TDS) of the liquid phase is high, the enrichment of Hg in the gypsum becomes low, and it is confirmed that in the case where a value of the enrichment of Br/TDS is equal to 0.33 or more, the enrichment of Hg becomes substantially zero (0.01 ppm).

Further, in the case where the value of the enrichment of Br/TDS is equal to 0.25 or more, the enrichment of Hg becomes 0.2 ppm. Therefore, mercury content inside the gypsum particle is infinitesimal.

The enrichment of Br inside the limestone-gypsum slurry 20 at the unit bottom portion of the wet SOx removal unit 21 is measured by a Br enrichment meter 60. Further, based on a measurement result thereof, the state is held as it is in the case where the predetermined enrichment is kept.

Further, in the case where the enrichment of Br becomes the predetermined enrichment or lower, control to adjust an opening degree of a valve V₆ is executed by a control unit 61 so as to increase a supply amount of HBr supplied from the HBr supply unit 50.

In contrast, in the case where the enrichment of Br exceeds the predetermined enrichment, control to adjust an opening level of the valve V₅ interposed on a line L₃ is executed by the control unit 61 so as to return, to the unit bottom portion side of the wet SOx removal unit 21, separate liquid 34 separated from a later-described water separator 33.

As a result of this control, the enrichment of Br having an appropriate volume can be constantly kept, and mercury in the flue gas 12 and removed by the SOx removal unit can be stabilized in the liquid phase.

Further, oxidation-reduction potential of the limestone-gypsum slurry 20 in the wet SOx removal unit 21 is kept within a constant range. The reason is to prevent mercury oxide (Hg²⁺) inside the limestone-gypsum slurry 20 from being reduced with the metal mercury (Hg⁰) by SO₂ or the like as shown in a following formula (6), and prevent mercury from being re-scattered.

Hg²⁺+2e⁻ ⇔ Hg⁰ (6)

For a unit to keep the oxidation-reduction potential of the limestone-gypsum slurry 20 constant, an ORP controller 56 configured to control the oxidation-reduction potential (ORP) of the limestone-gypsum slurry 20 is used. For example, a supply amount of the oxidizing agent 55 is adjusted such that the oxidation-reduction potential becomes preferably 200 mV or higher, and more preferably, 600 mV or higher.

As a result, mercury oxide dissolved in the limestone-gypsum slurry 20 is prevented from becoming metal mercury and re-scattered, and also mercury is prevented from being entrained in the flue gas 12.

The limestone-gypsum slurry 20 stored in the unit bottom portion 21b of the wet SOx removal unit 21 and used for desulfurization is drawn off from the unit bottom portion 21b after being oxidized. The drawn-off limestone-gypsum slurry 20 is fed to the water separator 33 via a line L₂, and then discharged outside the system as a dehydrated cake (gypsum) 28 containing mercury bromide (HgBr₂).

For the water separator 33, a belt filter or the like may be used, for example.

A method of supplying the limestone-gypsum slurry 20 is not limited to the method of jetting from the nozzle 21c toward the unit top portion side. For example, the limestone-gypsum slurry may be flown downward from the nozzle 21c so as to be opposed to the flue gas 12.

HBr is entrained in the flue gas 12 to be introduced into the wet SOx removal unit 21. Therefore, mercury oxide in the flue gas 12 is dissolved into the absorbent in the ionic state, and mercury can be stabilized in the liquid phase.

The separate liquid 34 containing mercury separated at the water separator 33 is introduced via the line L₃ into a flocculation unit 35 in which flocculation treatment is applied to a floc contained in the mercury absorbent.

In the flocculation unit 35, for example, a flocculation treatment agent 36 like flocculant such as a heavy metal scavenger and a chelate agent is added, and the flocculation treatment is applied to a floc 37 containing mercury inside the separate liquid 34 containing mercury.

For the flocculation treatment agent 36, for example, Fe-based flocculant, Al-based flocculant, polymer-based flocculant, etc. can be exemplified.

When the flocculation treatment is applied, mercury oxide inside the separate liquid 34 containing mercury is flocculated, thereby transferring mercury from the liquid phase to the solid phase.

Evaporation treatment is separately applied to the floc 37 in the flocculation unit 35 by an evaporation treatment unit, thereby applying treatment to eliminate wastewater.

Further, a dehydration treatment device 38 configured to dehydrate the floc 37 and separate a solid from liquid may also be provided to perform dehydration treatment and separate the floc into sludge 39 and treated water 40.

Then, since the sludge 39 as a dehydration product contains mercury, the sludge 39 is treated separately.

Further, the treated water 40, namely, filtrate may be reused as dilution liquid for the limestone 26 at the limestone supply unit 27. Also, the treated water 40 may be utilized as a part of the water 30 to be supplied into the unit body 21a.

Moreover, for example, the treatment to eliminate the wastewater may be applied to the treated water 40 so as to evaporate the treated water 40 besides reusing the treated water 40. Also, the treated water 40 may be transferred to a wastewater treatment device 41, and operation such as removing a suspended solid and a heavy metal 42 contained inside the treated water 40 and adjusting pH of the filtrate obtained from dehydration may be performed by the wastewater treatment device 41.

A part of wastewater 43 for which the wastewater treatment has been applied at the wastewater treatment device 41 is returned to the wet SOx removal unit 21, and a remaining part is treated as discharging water.

Next, a second treatment system for mercury in a flue gas will be described. Note that components same as those of the first system are denoted by the same reference signs and repetition of a description therefor will be omitted.

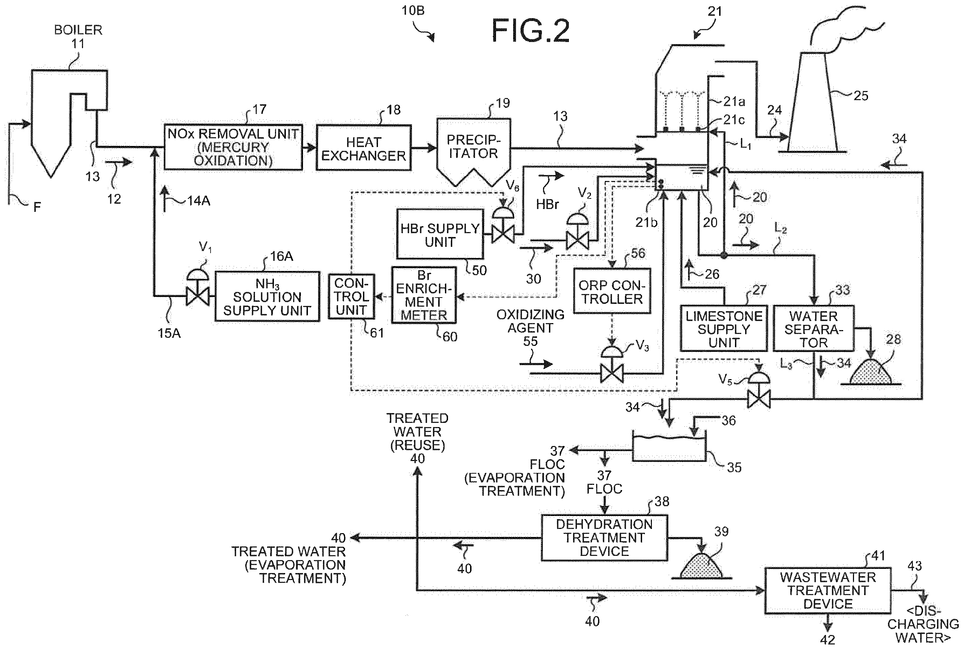

FIG. 2 is a schematic diagram illustrating the treatment system for mercury in a flue gas.

As illustrated in FIG. 2, a treatment system for mercury in the flue gas 10B is configured to supply HBr into limestone-gypsum slurry 20 of the SOx removal unit 21 from an HBr supply unit 50 instead of supplying HBr into a flue gas 12 in a treatment system for mercury in the flue gas 10A of the first embodiment. This increases enrichment of HBr inside the limestone-gypsum slurry 20.

As a result, HBr having enrichment equal to predetermined enrichment or higher is contained inside slurry absorbent. Therefore, since reaction in a following formula (5) progresses in a leftward direction and mercury exists in an ionic state, mercury can be stabilized in a liquid phase.

Hg²⁺+SO₄²⁻ ⇔ HgSO₄ (5)

Enrichment of bromine inside alkali absorbent in the wet SOx removal unit 21 is increased to the predetermined enrichment or higher by additionally supplying HBr from the HBr supply unit 50. By thus setting the enrichment of bromine to the predetermined enrichment or higher, mercury in the flue gas 12 can be stabilized in an ionic state Hg²⁺, for example, inside solution of limestone-gypsum slurry 20 which is the alkali absorbent discharged from the wet SOx removal unit 21.

The enrichment of Br in the limestone-gypsum slurry 20 at a unit bottom portion of the wet SOx removal unit 21 is measured by a Br enrichment meter 60. Further, based on a measurement result thereof, the state is held as it is in the case where the predetermined enrichment is kept.

Further, in the case where the enrichment of Br becomes the predetermined enrichment or lower, control to adjust an opening degree of a valve V₆ is executed by a control unit 61 so as to increase a supply amount of HBr supplied from the HBr supply unit 50.

In contrast, in the case where the enrichment of Br exceeds the predetermined enrichment, control to adjust an opening level of a valve V₅ interposed on a line L₃ is executed by the control unit 61 so as to return separate liquid 34 separated at a water separator 33 to a unit bottom portion side of the wet SOx removal unit 21.

As a result of this control, the enrichment of Br having an appropriate volume can be constantly kept, and mercury in the flue gas 12 and removed by the SOx removal unit can be stabilized in the liquid phase.

Next, a third treatment system for mercury in a flue gas will be described. Note that components same as those of first and second systems are denoted by the same reference signs and repetition of a description therefor will be omitted.

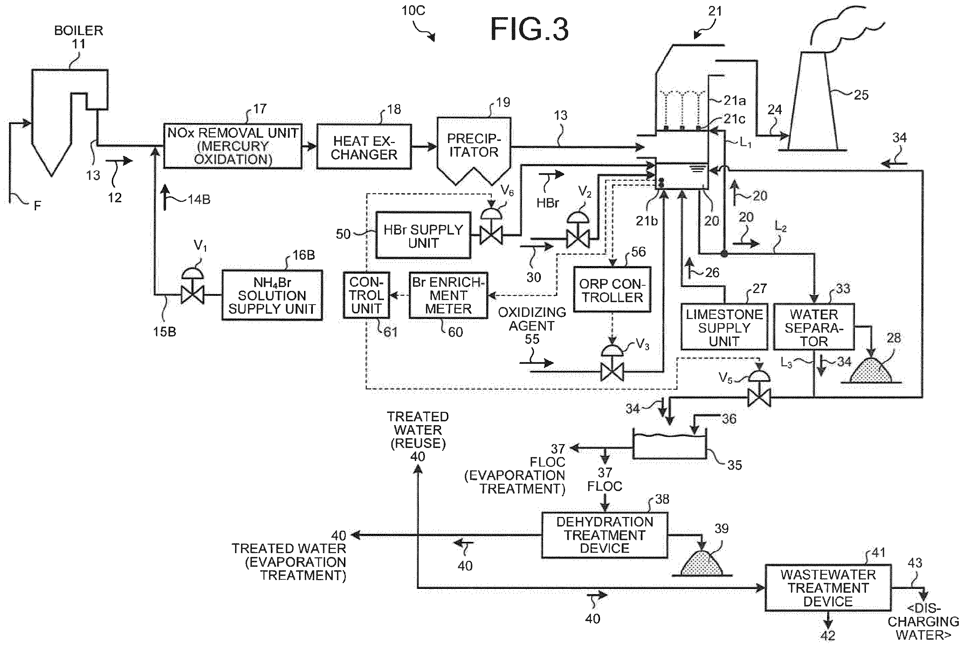

FIG. 3 is a schematic diagram illustrating the treatment system for mercury in the flue gas.

As illustrated in FIG. 3, a treatment system for mercury in a flue gas 10C supplies, as a denitration aid, ammonium bromide (NH₄Br) solution 14B into a flue gas 12 flowing in a flue gas duct 13 via an ammonium bromide (NH₄Br) supply line 15B from an ammonium bromide (NH₄Br) solution supply unit 16B in a previous stage side of an NOx removal unit 17.

Further, NOx in the flue gas 12 is reduced by NH₃ gas and also metal mercury (Hg⁰) is oxidized by a denitrification catalyst in coexistence of an HBr gas.

For the NOx removal unit 17, a general unit including a reducing and denitrating catalyst can be used. The reducing and denitrating catalyst is not specifically limited, but for example, a catalyst in which metal oxide of W, Sn, In, Co, Ni, Fe, Ni, Ag, Cu, etc. is supported on a carrier such as zeolite can be used. An amount of the reducing and denitrating catalyst included in the NOx removal unit 17 may be increased more than a normal amount in order to improve mercury oxidation efficiency.

The ammonium bromide (NH₄Br) solution 14B is used as an example, and an oxidation aid and a reduction aid are generated and also the flue gas 12 is made to contain HBr when the ammonium bromide (NH₄Br) solution 14B is vaporized.

Here, an aid that functions as an oxidation aid used to oxidize metal mercury (Hg⁰) in coexistence of an oxidation aid and also functions as a reducing agent to reduce NOx with a reduction aid is referred to as a reduction and oxidation aid. The HBr gas is used as the oxidation aid, and NH₃ gas is used as the reduction aid.

Note that the oxidation aid (e.g., HBr gas) and the reduction aid (e.g., NH₃ gas) may be separately introduced as well.

The NH₄Br solution 14B is supplied, via the ammonium bromide (NH₄Br) solution supply line 15B, from the NH₄Br solution supply unit 16B into the flue gas 12 discharged from the boiler 11.

Droplets of the NH₄Br solution 14B sprayed into the flue gas duct 13 from the NH₄Br solution supply unit 16B are evaporated and vaporized due to a high atmospheric temperature of the flue gas 12, and fine solid particles of NH₄Br are generated and decomposed into HBr and NH₃ as shown in a following formula (7). Therefore, NH₄Br solution 14B sprayed from a spray unit is decomposed and HBr and NH₃ are generated, and then the NH₃ gas and the HBr gas are supplied into the flue gas duct 13.

NH₄Br → NH₃+HBr (7)

Preferably, a temperature of the flue gas 12 in the flue gas duct 13 is, for example, 320°C or more and 420°C or less, but more preferably, 320°C or more and the 380°C or less although it depends on combustion conditions at the boiler 11. The reason is that denitration reaction of NOx and oxidation reaction of Hg can be effectively achieved on the denitrification catalyst in this temperature range.

Further, the flue gas 12 is fed to the NOx removal unit 17 after containing the HBr gas and the NH₃ gas generated from the droplets of the NH₄Br solution 14B sprayed from the NH₄Br solution supply unit 16B into the flue gas duct 13. In the NOx removal unit 17, the NH₃ gas generated by decomposing NH₄Br is used to reduce and denitrate NOx, and the HBr gas is used to oxidize Hg, and NOx and Hg are removed from the flue gas 12. Therefore, a mercury removal rate is more improved than the case of using ammonia.

More specifically, on the denitrification catalyst charged into a denitrification catalyst layer filled in the NOx removal unit 17, the NH₃ gas reduces and denitrates NOx as shown in a following formula (1) and Hg is oxidized by the HBr gas as shown in a following formula (8).

4NO+4NH₃+O₂ → 4N₂+6H₂O (1)

Hg+1/2O₂+2HBr → HgBr₂+H₂O (8)

The flue gas 12 is passed through a heat exchanger 18 and a precipitator (ESP) 19, and then fed to a wet SOx removal unit 21 after reducing NOx in the flue gas 12 and oxidizing Hg in the flue gas 12 at the NOx removal unit 17. Further, a heat recovery device may be disposed between the heat exchanger 18 and the precipitator (ESP) 19.

After that, SOx is desulfurized at the wet SOx removal unit 21, but at this point, since enrichment of Br inside limestone-gypsum slurry is set high, reaction in a following formula (5) progresses in a leftward direction in the slurry absorbent, and since mercury exists in an ionic state. As a result, mercury can be stabilized in a liquid phase.

Hg²⁺+SO₄²⁻ ⇔ HgSO₄ (5)

Further, it is not necessary to separately provide an HBr supply unit 50 configured to supply HBr like the first embodiment because, different from the first system the reducing agent and the oxidizing agent for denitrification are generated by using the ammonium bromide as the reducing and oxidizing agent used in the NOx removal unit 17 and further the flue gas 12 is introduced into the wet SOx removal unit 21 after being made to contain hydrogen bromide (HBr).

The enrichment of Br inside the limestone-gypsum slurry 20 at the unit bottom portion of the wet SOx removal unit 21 is measured by a Br enrichment meter 60. Further, based on a measurement result thereof, the state is held as it is in the case where the predetermined enrichment is kept.

Further, in the case where the enrichment of Br becomes predetermined enrichment or lower, control to adjust an opening degree of a valve V₁ is executed by a control unit 61 so as to increase a supply amount of NH₄Br supplied from the ammonium bromide (NH₄Br) solution supply unit 16B.

In contrast, in the case where the enrichment of Br exceeds the predetermined enrichment, control to adjust an opening level of a valve V₅ interposed on a line L₃ is executed by the control unit 61 so as to return separate liquid 34 separated at a water separator 33 to a unit bottom portion side of the wet SOx removal unit 21.

As a result of this control, the enrichment of Br having an appropriate volume can be constantly kept, and mercury in the flue gas 12 and removed by the SOx removal unit can be stabilized in the liquid phase.

Next, a fourth treatment system for mercury in a flue gas will be described. Note that components same as those of first to third systems are denoted by the same reference signs and repetition of a description therefor will be omitted.

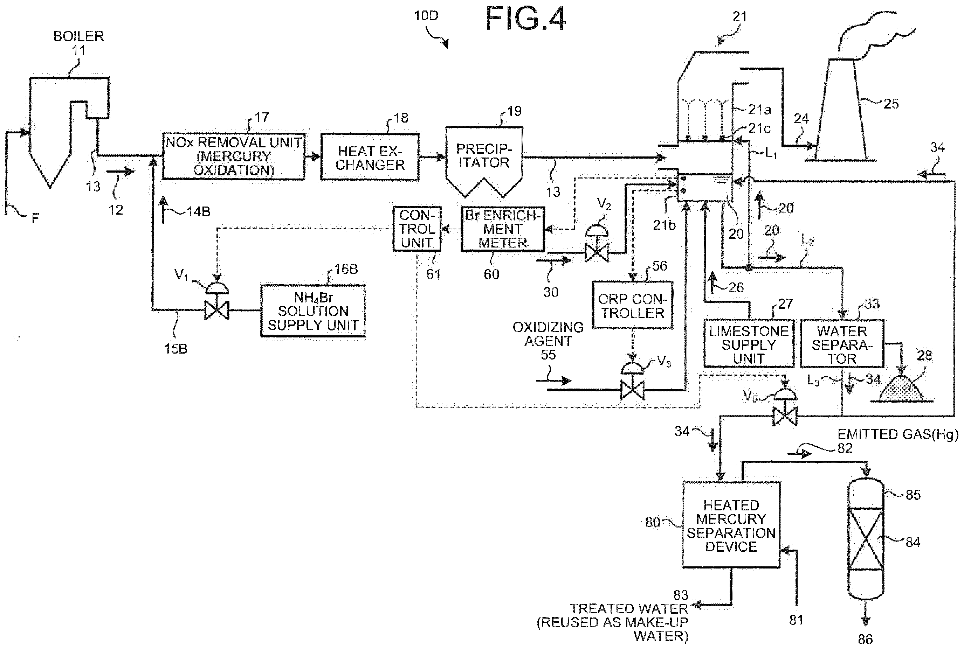

FIG. 4 is a schematic diagram illustrating the treatment system for mercury in the flue gas.

As illustrated in FIG. 4, a treatment system for mercury in a flue gas 10D includes a heating mercury separation device 80 configured to remove water from separate liquid 34 containing mercury separated at a water separator 33 of the first system

The heating mercury separation device 80 sprays the separate liquid 34 into the unit body 21a and also supplies steam 81 to the inside, and separates mercury as a gas state by heat of the steam 81, and the mercury in the gas state is transferred into an emitted gas 82.

Treated water 83 from which mercury is removed at the heating mercury separation device 80 is reused as make-up water.

Further, gas-like mercury transferred into the emitted gas 82 is introduced into, for example, to a mercury absorber 85 filled with activated carbon 84. Then, mercury is absorbed and removed with the activated carbon 84 inside the mercury absorber 85. Further, treated water 86 from which mercury is removed may be used for evaporation treatment or reused in a different way.

Next, a fifth treatment system for mercury in a flue gas for use with the method of the present invention will be described. Note that components same as those of first to fourth systems are denoted by the same reference signs and repetition of a description therefor will be omitted.

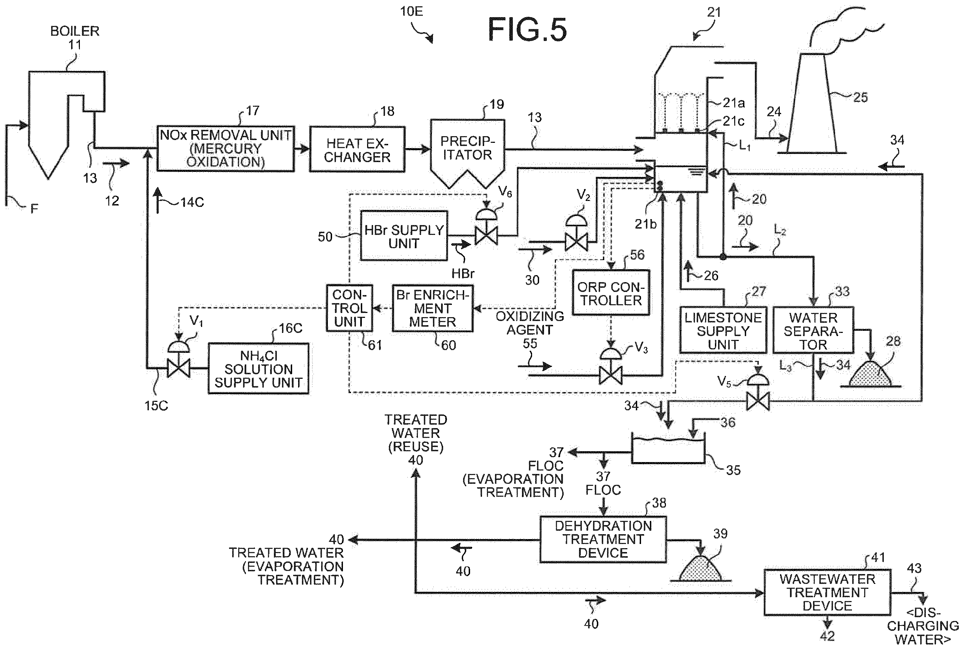

FIG. 5 is a schematic diagram illustrating the treatment system for mercury in the flue gas to be used with the method of the present invention.

As illustrated in FIG. 5, the treatment system for mercury in a flue gas 10E supplies ammonium chloride instead of ammonium bromide used in a NOx removal unit 17 of the third system . An ammonium chloride (NH₄Cl) solution supply unit 16C configured to spray NH₄Cl solution 14C containing ammonium chloride (NH₄Cl) as a reduction and oxidization aid; and a NOx removal unit 17 configured to reduce NOx in a flue gas 12 with NH₃ gas and also including a denitrification catalyst to oxidize metal mercury (Hg⁰) in coexistence of an HCl gas are provided in a flue gas duct 13 at a downstream of a boiler 11.

The NH₄Cl solution 14C is supplied from an NH₄Cl solution supply unit 16C via an ammonium chloride (NH₄Cl) supply line 15C to the flue gas 12 discharged from the boiler 11.

Droplets of the NH₄Cl solution 14C sprayed into the flue gas duct 13 from the NH₄Cl solution supply unit 16C are evaporated and vaporized due to a high atmospheric temperature of the flue gas 12, and fine solid particles of NH₄Cl are generated and decomposed into HCl and NH₃ as shown in a following formula (9). Therefore, the NH₄Cl solution 14C sprayed from a spray unit generates HCl and NH₃, and supplies the NH₃ gas and the HCl gas into the flue gas duct 13.

NH₄Cl → NH₃+HCl (9)

Preferably, a temperature of the flue gas 12 in the flue gas duct 13 is, for example, 320°C or more and 420°C or less, but more preferably, 320°C or more and the 380°C or less although it depends on combustion conditions at the boiler 11. The reason is that denitration reaction of NOx and oxidation reaction of Hg can be effectively achieved on the denitrification catalyst in this temperature range.

Further, the flue gas 12 is fed to the NOx removal unit 17 after containing the HCl gas and the NH₃ gas generated from the droplets of the NH₄Cl solution 14C sprayed into the flue gas duct 13 from the NH₄Cl solution supply unit 16C. In the NOx removal unit 17, the NH₃ gas generated from decomposing NH₄Cl is used to reduce and denitrate NOx, and the HCl gas is used to oxidize Hg, and NOx and Hg are removed from the flue gas 12. Therefore, a mercury removal rate is more improved than the case of using ammonia.

More specifically, on the denitrification catalyst charged to a denitrification catalyst layer filled in the NOx removal unit 17, the NH₃ gas reduces and denitrates NOx as shown in a following formula (10) and Hg is oxidized by the HCl gas as shown in a following formula (11).

4NO+4NH₃+O₂ → 4N₂+6H₂O (10)

Hg+1/2O₂+2HCl → HgCl₂+H₂O (11)

The flue gas 12 lowers the temperature of the flue gas 12 by a heat exchanger 18 after reducing NOx in the flue gas 12 and oxidizing Hg in the flue gas 12 at the NOx removal unit 17.

Next, after dust removal at a precipitator 19, the flue gas 12 is fed to a wet SOx removal unit 21 for desulfurization treatment. HBr is supplied from an HBr supply unit 50 into limestone-gypsum slurry 20 of the wet SOx removal unit 21. This increases enrichment of HBr inside the limestone-gypsum slurry 20.

As a result, HBr having predetermined enrichment or more is contained inside slurry absorbent. Therefore, since reaction in a following formula (5) progresses in a leftward direction and mercury exists in an ionic state, mercury can be stabilized in a liquid phase.

Hg²⁺+SO₄²⁻ ⇔ HgSO₄ (5)

Enrichment of bromine inside alkali absorbent in the wet SOx removal unit 21 is set to the predetermined enrichment or higher by separately supplying HBr from the HBr supply unit 50. By thus setting the enrichment of bromine to the predetermined enrichment or higher, mercury in the flue gas 12 can be stabilized in an ionic state Hg²⁺, for example, inside solution of limestone-gypsum slurry 20 which is the alkali absorbent discharged from the wet SOx removal unit 21.

The enrichment of Br inside the limestone-gypsum slurry 20 at the unit bottom portion of the wet SOx removal unit 21 is measured by a Br enrichment meter 60. Further, based on a measurement result thereof, the state is held as it is in the case where the predetermined enrichment is kept.

Further, in the case where the enrichment of Br becomes the predetermined enrichment or lower, control to adjust an opening degree of a valve V₁ or a valve V₆ is executed by a control unit 61 so as to increase a supply amount of NH₄Br supplied from the ammonium bromide (NH₄Br) solution supply unit 16B or increase a supply amount of HBr supplied from the HBr supply unit 50.

In contrast, in the case where the enrichment of Br exceeds the predetermined enrichment, control to adjust an opening level of the valve V₅ interposed on a line L₃ is executed by the control unit 61 so as to return separate liquid 34 separated at a water separator 33 to a bottom portion side of the wet SOx removal unit 21.

As a result of this control, the enrichment of Br having an appropriate volume can be constantly kept, and mercury in the flue gas 12 and removed by the SOx removal unit can be stabilized in the liquid phase.

Next, a sixth treatment system for mercury in a flue gas for use with the method of the present invention will be described. Note that components same as those of first to fifth systems are denoted by the same reference signs and repetition of a description therefor will be omitted.

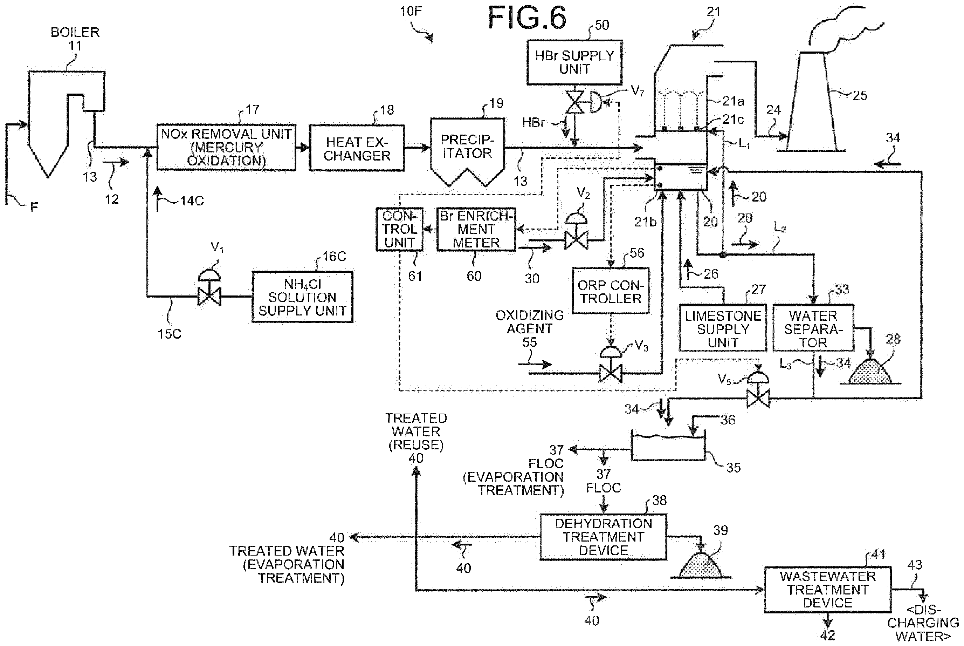

FIG. 6 is a schematic diagram illustrating the treatment system for mercury in the flue gas for use with the method of the present invention.

As illustrated in FIG. 6, a treatment system for mercury in a flue gas 10F supplies HBr from an HBr supply unit 50 into a flue gas duct 13 configured to introduce a flue gas 12 into a wet SOx removal unit 21, different from a fifth system.

HBr having been introduced into the wet SOx removal unit 21 together with the flue gas 12 is dissolved into limestone-gypsum slurry 20, thereby increasing enrichment of HBr in the limestone-gypsum slurry 20 to predetermined enrichment or higher.

As a result, HBr is contained in slurry absorbent, and therefore reaction in a following formula (5) progresses in a leftward direction and mercury exists in an ionic state. Therefore, mercury can be stabilized in a liquid phase.

Hg²⁺+SO₄²⁻ ⇔ HgSO₄ (5)

HBr is separately supplied from the HBr supply unit 50 into the flue gas 12 introduced to the wet SOx removal unit 21, and enrichment of bromine inside alkali absorbent inside the wet SOx removal unit 21 is increased to predetermined enrichment or higher. By thus setting the enrichment of bromine to the predetermined enrichment or higher, mercury in the flue gas 12 can be stabilized in an ionic state Hg²⁺, for example, inside solution of limestone-gypsum slurry 20 which is the alkali absorbent discharged from the wet SOx removal unit 21.

The enrichment of Br inside the limestone-gypsum slurry 20 at the unit bottom portion of the wet SOx removal unit 21 is measured by a Br enrichment meter 60. Further, based on a measurement result thereof, the state is held as it is in the case where the predetermined enrichment is kept.

Additionally, in the case where the enrichment of Br becomes to the predetermined enrichment or lower, control to adjust an opening degree of a valve V₇ is executed by a control unit 61 so as to increase a supply amount of HBr supplied from the HBr supply unit 50.

In contrast, in the case where the enrichment of Br exceeds the predetermined enrichment, control to adjust an opening level of a valve V₅ interposed on a line L₃ is executed by the control unit 61 so as to return separate liquid 34 separated at a water separator 33 to a unit bottom portion side of the wet SOx removal unit 21.

As a result of this control, the enrichment of Br having an appropriate volume can be constantly kept, and mercury in the flue gas 12 and removed by the SOx removal unit can be stabilized in the liquid phase.

### Reference Signs List

- 10A - 10F: Treatment system for mercury in flue gas
- 11: Boiler
- 12: Flue gas
- 16A: NH₃ solution supply unit
- 16B: NH₄Br solution supply unit
- 16C: NH₄Cl solution supply unit
- 17: NOx removal unit
- 18: Heat exchanger (AH)
- 50: HBr supply unit
- 60: Br enrichment meter
- 61: Control unit

## Claims

1. A treatment method for removing Hg contained in a flue gas (12) flowing from a boiler (11), comprising:
suppling an NH₄Cl solution to the flue gas (12) discharged from the boiler (11);
reducing NOx in the flue gas (12) with NH₃ by a denitrification catalyst and oxidizing metal mercury (Hg⁰) in the flue gas by using HCl, NH₃ and HCl having been generated from decomposition of the NH₄Cl solution sprayed into the flue gas;
performing heat exchange for the flue gas (12) after reducing NOx in the flue gas (12) and oxidizing Hg in the flue gas (12);
removing soot dust in the flue gas (12);
removing oxidized mercury Hg²⁺ in the flue gas (12) with alkali absorbent and also desulfurizing sulfur oxide in the flue gas (12); and
suppling a Br compound into the flue gas (12) or into the alkali absorbent,
wherein enrichment of bromine in the alkali absorbent is set to predetermined enrichment or higher and the mercury is kept in Hg²⁺ ionic state in the alkali absorbent.

2. The treatment method for removing Hg contained in the flue gas according to claim 1, wherein the alkali absorbent is limestone slurry , comprising:
drawing off limestone-gypsum slurry generated in the desulfuring sulfur oxide in the flue gas (12); and
separating gypsum from the drawn off limestone-gypsum slurry.

3. The treatment method for removing Hg contained in the flue gas according to claim 2, further comprising: flocculating solid content contained inside separate liquid after the gypsum separation to separate a floc; and
reusing, in absorbing Sox, treated liquid obtained after the separation; or
applying the treated liquid to wastewater treatment.

4. The treatment method for removing Hg contained in the flue gas according to claim 2 or 3, wherein the enrichment of bromine is kept by increasing a supply amount of the Br compound or returning the separate liquid to the alkali absorbent.

5. The treatment method for removing Hg contained in the flue gas according to any one of claims 1 to 4, wherein the enrichment of bromine divided by a total dissolved substance of the liquid phase is equal to 0.25 or more.

6. The treatment method for removing Hg contained in the flue gas according to claim 5, the enrichment of bromine divided by a total dissolved substance of the liquid phase is equal to 0.33 or more.

## Patentansprüche

1. Ein Behandlungsverfahren zum Entfernen von Hg, enthalten in einem Abgas (12), das aus einem Kessel (11) strömt, umfassend:
Zuführen einer NH₄Cl-Lösung zu dem aus dem Kessel(11) abgeführten Abgas(12);
Reduzieren von NOₓ im Abgas (12) mit NH₃ durch einen Denitrifikationskatalysator und Oxidieren von Quecksilber-Metall (Hg⁰) im Abgas unter Verwendung von HCl, NH₃ und HCl, erzeugt durch Zersetzung der in das Abgas eingespritzten NH₄Cl-Lösung;
Durchführen eines Wärmeaustausches für das Abgas (12) nach dem Reduzieren von NOₓ im Abgas (12) und dem Oxidieren von Hg im Abgas (12) ;
Entfernen von Rußstaub aus dem Abgas (12);
Entfernen von oxidiertem Quecksilber Hg²⁺ in dem Abgas (12) mit einem Alkaliabsorptionsmittel und auch Entschwefeln von Schwefeloxid im Abgas (12); und
Zuführen einer Br-Verbindung in das Abgas (12) oder in das Alkaliabsorptionsmittel,
wobei die Bromanreicherung in dem Alkaliabsorptionsmittel auf eine vorbestimmte Anreicherung oder höher festgesetzt wird und das Quecksilber im Ionenzustand Hg²⁺ in dem Alkaliabsorptionsmittel gehalten wird.

2. Das Behandlungsverfahren zum Entfernen von Hg, enthalten in dem Abgas, gemäß Anspruch 1, wobei das Alkaliabsorptionsmittel eine Kalksteinaufschlämmung ist, umfassend:
Entfernen der Kalkstein-Gips-Aufschlämmung, die beim Entschwefeln von Schwefeloxid im Abgas (12) entstanden ist; und
Abtrennen des Gipses aus der entfernten Kalkstein-Gips-Aufschlämmung.

3. Das Behandlungsverfahren zum Entfernen von Hg, enthalten in dem Abgas, gemäß Anspruch 2, ferner umfassend: Ausflocken von festem Inhalt, der in der separaten Flüssigkeit nach der Gipsabtrennung enthalten ist, um Flocken abzutrennen; und
Wiederverwenden der behandelten Flüssigkeit, die nach dem Abtrennen erhalten wurde, zum Absorbieren von SOₓ, oder
Zuführen der behandelten Flüssigkeit zur Abwasserbehandlung.

4. Das Behandlungsverfahren zum Entfernen von Hg, enthalten im Abgas, gemäß Anspruch 2 oder 3, wobei die Bromanreicherung durch Erhöhen einer Zufuhrmenge der Br-Verbindung oder Rückführen der separaten Flüssigkeit in das Alkaliabsorptionsmittel aufrechterhalten wird.

5. Das Behandlungsverfahren zum Entfernen von Hg, enthalten im Abgas, gemäß den Ansprüchen 1 bis 4, wobei die Bromanreicherung geteilt durch eine insgesamt gelöste Substanz der flüssigen Phase gleich 0,25 oder mehr ist.

6. Das Behandlungsverfahren zum Entfernen von Hg, enthalten im Abgas, gemäß Anspruch 5, wobei die Bromanreicherung geteilt durch eine insgesamt gelöste Substanz der flüssigen Phase gleich 0,33 oder mehr ist.

## Revendications

1. Procédé de traitement pour enlever le Hg qui est contenu dans un gaz d'échappement de combustion (12) qui s'écoule depuis une chaudière (11), comprenant :
l'alimentation d'une solution de NH₄Cl sur le gaz d'échappement de combustion (12) qui est déchargé depuis la chaudière (11) ;
la réduction du NOx dans le gaz d'échappement de combustion (12) à l'aide de NH₃ au moyen d'un catalyseur de dénitrification et l'oxydation du mercure sous forme de métal (Hg⁰) dans le gaz d'échappement de combustion en utilisant du HCl, du NH₃ et du HCl résultant d'une génération à partir de la décomposition de la solution de NH₄Cl qui est pulvérisée à l'intérieur du gaz d'échappement de combustion ;
la réalisation d'un échange thermique pour le gaz d'échappement de combustion (12) après la réduction du NOx dans le gaz d'échappement de combustion (12) et l'oxydation du Hg dans le gaz d'échappement de combustion (12) ;
l'enlèvement de la poussière sous forme de particules de suie dans le gaz d'échappement de combustion (12) ;
l'enlèvement du mercure oxydé Hg²⁺ dans le gaz d'échappement de combustion (12) au moyen d'un absorbant alcalin et également la désulfuration de l'oxyde de soufre dans le gaz d'échappement de combustion (12) ; et
l'alimentation d'un composé de Br à l'intérieur du gaz d'échappement de combustion (12) ou à l'intérieur de l'absorbant alcalin ; dans lequel :
l'enrichissement en brome dans l'absorbant alcalin est réglé à un enrichissement prédéterminé ou au-delà et le mercure est maintenu dans l'état ionique Hg²⁺ dans l'absorbant alcalin.

2. Procédé de traitement pour enlever le Hg qui est contenu dans le gaz d'échappement de combustion selon la revendication 1, dans lequel l'absorbant alcalin est de la boue de calcaire, comprenant :
l'évacuation de la boue de calcaire-gypse qui est générée lors de la désulfuration de l'oxyde de soufre dans le gaz d'échappement de combustion (12) ; et
la séparation du gypse par rapport à la boue de calcaire-gypse évacuée.

3. Procédé de traitement pour enlever le Hg qui est contenu dans le gaz d'échappement de combustion selon la revendication 2, comprenant en outre :
la floculation du contenu solide qui est contenu à l'intérieur du liquide séparé après la séparation du gypse de manière à séparer un floc ; et
la réutilisation, lors de l'absorption du Sox, du liquide traité qui est obtenu après la séparation ; ou
l'application du liquide traité sur un moyen de traitement de l'eau résiduaire.

4. Procédé de traitement pour enlever le Hg qui est contenu dans le gaz d'échappement de combustion selon la revendication 2 ou 3, dans lequel l'enrichissement en brome est maintenu en augmentant une quantité d'alimentation du composé de Br ou en retournant le liquide séparé sur l'absorbant alcalin.

5. Procédé de traitement pour enlever le Hg qui est contenu dans le gaz d'échappement de combustion selon l'une quelconque des revendications 1 à 4, dans lequel l'enrichissement en brome divisé par une substance dissoute totale de la phase liquide est égal à 0,25 ou plus.

6. Procédé de traitement pour enlever le Hg qui est contenu dans le gaz d'échappement de combustion selon la revendication 5, dans lequel l'enrichissement en brome divisé par une substance dissoute totale de la phase liquide est égal à 0,33 ou plus.
